# EUROPEAN PATENT SPECIFICATION

(11) **EP 1 920 659 B1**
(45) Date of publication and mention of the grant of the patent: **30.11.2011**
(21) Application number: 07008603.8
(22) Date of filing: 27.04.2007
(51) Int. Cl.: A23B 4/00, A23B 4/005, A23L 1/31, A23L 1/317

(54) **Process for packaging and storing corned beef in flexible packaging for posterior slicing**
Verfahren zum Verpacken und Lagern von Corned Beef in flexiblen Verpackungen zum späteren Schneiden in Scheiben
Processus d'emballage et de stockage de corned-beef dans un emballage flexible pour tranchage ultérieur

(30) Priority: 07.11.2006 BR PI0605061
(43) Date of publication of application: 14.05.2008
(73) Proprietor: Bertin, Fernando Antonio, 16404-110 Lins SP (BR)
(72) Inventor: Bertin, Fernando Antonio, 16404-110 Lins SP (BR)
(74) Representative: Fernandez Lerroux, Aurelio

(56) References cited:
- WO-A-89/03789
- DE-U1-202006 011 573
- GB-A- 1 116 294
- GB-A- 1 284 805
- JP-A- 2 171 173
- JP-A- 2 269 673
- JP-A- 8 244 767
- US-A- 3 262 787
- US-A- 3 778 515
- US-A- 3 845 227
- US-A- 4 125 633
- US-A- 4 210 248
- SAIGO H ET AL: "Heat processing of film packaged foods and their storage characteristics. V. Influence of residual head-space air on the rate of heat penetration in foods packaged in film pouches." REPORT OF TOYO JUNIOR COLLEGE OF FOOD TECHNOLOGY AND TOYO INSTITUTE OF FOOD TECHNOLOGY 1974 TOYO INST. FD TECHNOL., MINAMIHANAYASHIKI, KAWANISHI, HYOGO, JAPAN, 1974, page 85-91, XP008088694
- ANONYMOUS: "Meat, chicken cooking process promises economic, time savings." FOOD PRODUCT DEVELOPMENT, vol. 15, no. 1, 1981, page 42, XP008088416

## Description

### BACKGROUND OF THE INVENTION

### Field of the Invention

The present invention refers to new packaging and storing system and product for corned beef, for a posterior slicing step.

### DESCRIPTION OF THE PRIOR ART

Corned beef for slicing known in the art as disclosed by GB1116294 (Armour) and US3262787 (Ellis Eugene) is typically packaged using metallic cans weighting between 6 pounds (6.720 kg) and 14 pounds (6.350 kg).

However this type of storage presents several drawbacks and disadvantages, such as: (a) difficult removal of the corned beef from the interior of the metallic cans for the slicing process; (b) high accident rates, mainly cuts, due to the need of cutting and handling metallic cans; (c) great risk of contamination of corned beef by the metallic scraps generated during the procedure of can opening; (d) contamination of the corned beef by an eventual oxidation of the metallic cans; (e) high waste index of corned beef when removing it from the interior of the metallic cans; and (f) unacceptance of some specific sterilization processes of product packaged in metallic cans.

The above-mentioned waste of corned beef involves increased industrial costs of the slicing process, a fact that impacts negatively in the profit margin of the slicing company.

From the point of view of the transportation, corned beef packaged in metallic cans creates a great volume and weight, incurring in higher freight costs. Since metallic cans present significant greater weight, when added to the global weight of the lot to be transported, costs are highly increased and, even worse, less safe.

It is also known from prior art different alternatives of packaging corned beef with flexible packages, such as those disclosed by Report of Toyo Junir College (Saigo et al) "Heat processing of film packaged foods and their storage characteristics", or Food product development, "Meat chicken cooking process promises economic time savings"; also US 3845227 (Shults et al), or GB1284805 (Dow Chemical) and JP02269673 (Hayashikane Sangyo).

The above mentioned prior art discloses flexible retort pouches, namely plastic flexible retort pouches, but none of them disclose a flexible retort pouch used along with a cardboard box to give a particular shape to the corned beef, so allowing manufacturers to replace the tin commonly used (see Food product development and GB 1284805), allowing also the increase of the portion size and therefore allowing the factories to have a better income portioned slicing.

Prior art, such as JP02171173 (Ashida) discloses sterilization processes where a film packaging container, such as pouch pack or retort food, is contained in a pressure vessel, heated with hot water or steam under pressure, sterilized and then cooled with water.

However none of prior art describes the combination of the packaging process as described in claim 1.

On the other hand, it is also known from the prior art several outer boxes to contain foods, such as DE 20 2006 011573 (Halberstaedter), JP08244767 (Kao Corp), US4210248 (Engdahl), US 3778515 (Ashley), US 4125633 (Vander Lugt) and WO8903789 (Garwood Ltd).

However, the above mentioned prior art discloses different kind of outing boxes, focused on keeping food properties (US 3778515 and WO8903789) or also focused on food display solutions (JP08244767 and US 4125633) or just focused on a food container (US4210248) or even refers to a package shaping a sausage which is not an outer box DE 20 2006 011573 .

None of them disclose a process for packaging and storing corned beef in a flexible container for future slicing, the process including the step of placing the corned beef in its flexible packaging inside an outer shaping box, to shape the packaged corned beef as desired.

What is needed therefore is a new process for packaging and storing corned beef and packaged corned beef for a posterior slicing process, which is based in its packaging and storing in a flexible packaging, in predetermined shapes, preferably in a retort pouch type, where its use eliminates all previously discussed drawbacks and identified negative aspects.

### SUMMARY OF THE INVENTION

The present invention provides a new process for packaging corned beef in a flexible container for future slicing, a process for storing corned beef packaged in a flexible container and a corned beef packaged in a flexible container for a posterior slicing step.

The flexible package is of a retort pouch type, presenting advantages as to allow sterilization, thus aggregating value since it increases the shelf life of the packaged product, which allows to the slicing company to work with a shelf live of up to 18 months.

Additionally, when using a retort pouch type packaging a significant reduction of loss of corned beef is observed when removing it from its packaging to the posterior slicing process.

The process and product of the present invention automatically drives to a reduction of the manufacturing costs, mainly when corned beef is removed from the retort pouch type packaging to be sent to the slicing process. Furthermore, the easy removal of corned beef from the packaging is a factor that increases the productivity related to the set up of the slicing process.

At its turn it is important to highlight that the use of the retort pouch type packaging provokes minimal changes during the preparation process of corned beef, thus innovating the packaging process.

### BRIEF DESCRIPTION OF THE DRAWINGS

Figure 1 is a perspective view of the shaping box of the flexible packaging.

Figure 2 is a perspective view of the flexible packaging, a retort pouch.

Figure 3 is a perspective view of a flexible packaging, a retort pouch, immediately before being opened, and the opening process.

Figure 4 is a perspective view of corned beef inside an opened flexible packaging

### DETAILED DESCRIPTION OF THE INVENTION

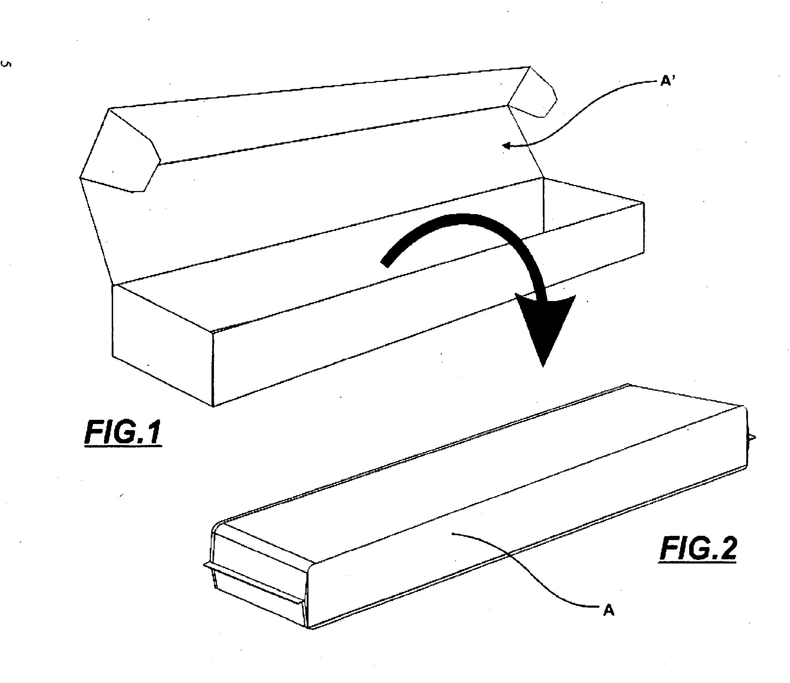

In Figure 1 it is shown a shaping box (A'), whose function is to accommodate and confer final shape to the packaging containing corned beef (not shown.)

In Figure 2 it is shown packaging (A) containing corned beef (not shown). This packaging is of retort pouch type and presents a rectangular shape 135 mm long x 95 mm wide. In another embodiment not shown, the packaging is of a square shape 114 mm x 114 mm each side.

The volume of corned beef stored in the rectangular and square shapes packaging may vary from 6 pounds (2.720 kg) to 18 pounds (8.160 kg).

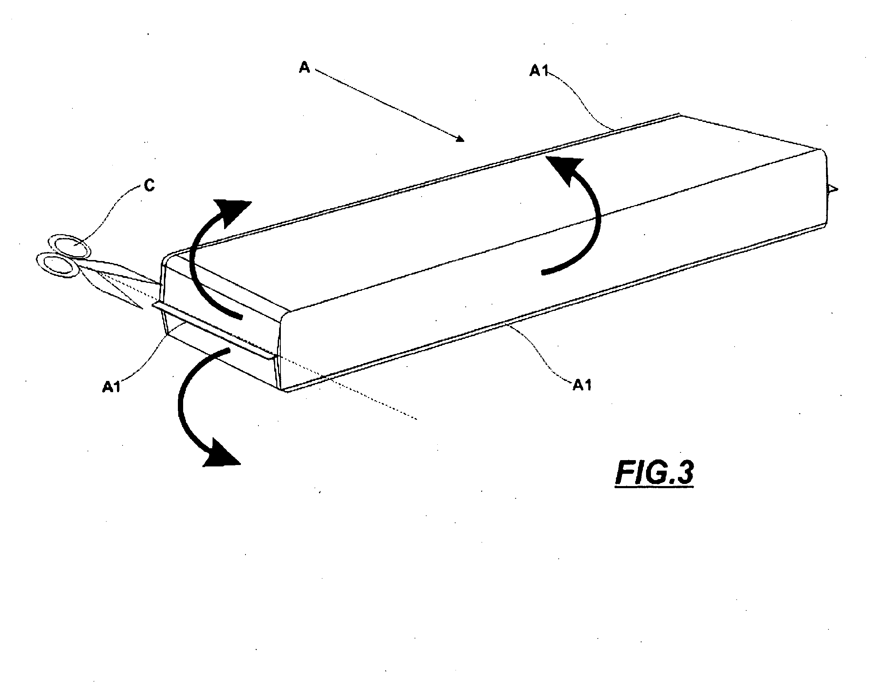

Figure 3 indicates the opening process for packaging A, where the opening is easily obtained through the cut, with a cutting instrument (C), of the closing edges (A1.

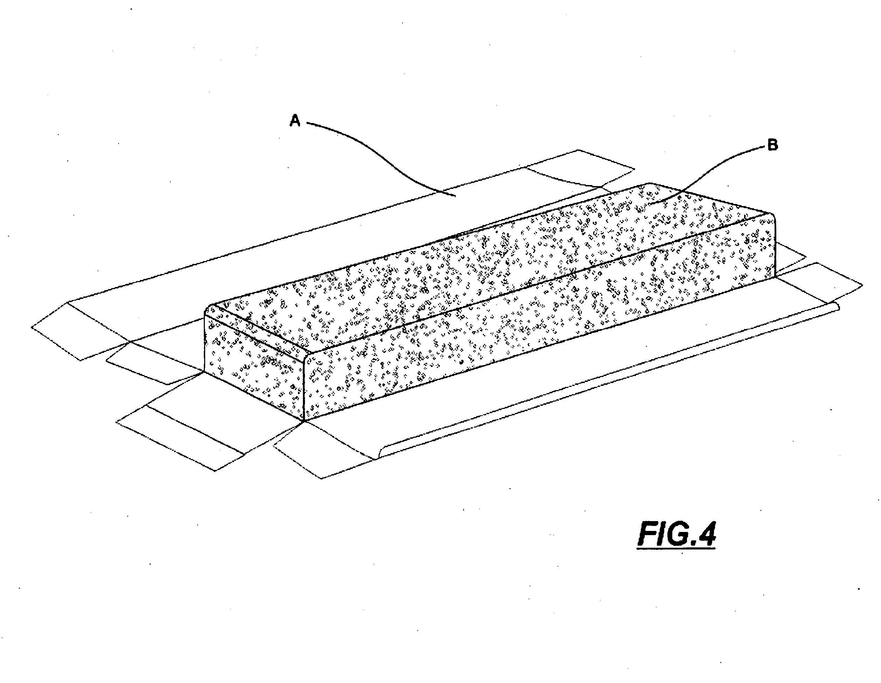

Figure 4 shows corned beef (B) inside an opened packaging (A) after applying the opening process described in Figure 3.

This innovative manner of packaging and storing corned beef aggregates value from the point of view of its manufacturing, storing and transportation processes. Additionaly, this packaging system ceates a more safe product for storing, handling, and transporting.

The process for manufacturing corned beef includes the following sequential steps:

(i) Cooking the meat: the crushed bovine meat is cooked under suitable parameters of temperature and pressure known in the art, in continual cookers for about five minutes;

(ii) Mixture preparation: the cooked bovine meat is transferred to a mixer where ingredients as salt, sugar and nitrite are added, obtaining a final mass of meat and ingredients;

(iii) Corned beef obtainment: after mixing all ingredients the final mass is put in vacuum packagers, where corned beef (B) is formed;

The new process for packaging and storing of corned beef in a flexible container for future slicing, includes then:

(1) Packaging: the formed corned beef (B) is directly packaged in a flexible packaging (A), namely a retort pouch; type packaging including closing edges.

(2) Sealing and compacting: the packaged corned beef (3) is transferred to a vacuum sealing equipment, where the packaging (A) is first sealed and then compacted, being this compaction made possible by the vacuum of this process;

(4) Sterilization: packaging (A), is placed in an autoclave, with controlled pressure and temperature to proceed with the sterilization. The packaging (A) is exposed to a temperature of 121°C and a pressure of 2.2 bar. In accordance with the dimensions of the packaging (A) this step may last up to 6 hours;

(5) Drying: the packaging is dried;

(6) Shaping: the packaging (A) duly dried does not present the defined final shaping. Packaging is then placed inside individual carton boxes, shaping boxes (A'), presenting several geometric shapes, such as cubic, rectangular, square and cylindrical.

(7) Storing: the flexible packaging (A) is stored for posterior transportation to the slicing company.

Thus the use of a flexible packaging, preferably retort pouch, provides several advantages such as: (a) easy removal and release of the corned beef during the slicing process; (b) elimination of accident risks, mainly cuts, since the flexible packaging does not present sharp points or regions; (c) elimination the risks of contamination of the corned beef since it allows for receiving a sterilization process, and also by presenting an aluminum internal film, which will prevent oxidation points; (d) corned beef waste index tending to zero when removing it from the packaging, decreasing the industrial costs of the slicing process, impacting positively over the profit margin of the slicing company; and (e) creating less volume and weight, incurring in lower transportation and freight costs.

## Claims

1. A process for packaging and storing corned beef in a flexible container for future slicing, the process including the steps of:
(1) placing a pro-manufactured corned beef in a flexible packaging namely a retortpouch type packaging, such packaging including closing edges.
(2) sealing and compacting the packaged corned beef;
(3) placing the packaged and sealed corned beef in an autoclave, applying temperature of 121°C and pressure of 2.2 bar during up to 6 hours.
sterilizing the packaged corned beef;
(4) drying_the packaged corned beef;
;
(5) placing the duly dried package corned beef inside an individual carton shaping box, presenting any desired geometric shape, selected from the group consisting of cubic, square rectangular and cylindrical shaping the packaged corned beef.

## Patentansprüche

1. Ein Verfahren zur Verpackung und Lagerung von Corned Beefin einem flexiblen Behälter um sie in der Zukunft scheiben zu können, wobei das Verfahren die folgenden Schritte folgen muss:
(1) Platzieren eines vorgefertigten Corned Beef in einer flexiblen Verpackung, nämlich eine Retorte Beutel Art Verpackung, diese Verpackung einschließlich der Schließungkanten.
(2) Abdichtung und Verdichten des verpackten Corned Beef;
(3) Platzierung der verpackten und versiegelten Corned Beefin einem Autoklaven, Anwendung eine Temperatur von 121 °C und einem Druck von 2,2 bar bei bis zu 6 Stunden, Sterilisation der verpackten Corned Beef,
(4) Trocknen der verpackten Corned Beef.
(5) platzieren ordnungsgemäß den getrocknet verpackt Corned Beefinnerhalb eines einzelnen Karton Gestaltung präsentiert mit einer beliebigen geometrischen Form aus der Gruppe bestehend aus: kubisch, quadratisch, rechteckig und zylindrisch, die die Gestaltung der Verpackung Corned Beef geben.

## Revendications

1. Procédé d'emballage et de stockage de boeuf salé dans un récipient souple pour un tranchage futur, le procédé comprenant les étapes de :
(1) placer du boeuf salé préalablement préparé dans un emballage souple, notamment un emballage de type sachet flexible, un tel emballage comprenant des bords de fermeture;
(2)sceller et compacter le boeuf salé emballé;
(3) placer le boeuf salé emballé et scellé dans un autoclave, soumettre à une température de 121°C et une pression de 2,2 bar pendant une durée allant jusqu'à 6 heures et stériliser le boeuf salé emballé;
(4) sécher le boeuf salé emballé;
(5) placer le boeuf salé emballé convenablement séché dans une boîte de mise en forme individuelle, présentant toute forme géométrique souhaitée, sélectionnée parmi le groupe constitué de: cubique, carré, rectangulaire et cylindrique, mettre en forme le boeuf salé emballé.
